# EUROPEAN PATENT APPLICATION

(11) **EP 1 471 122 A2**
(43) Date of publication of application: **27.10.2004**
(21) Application number: 04101649.4
(22) Date of filing: 21.04.2004
(51) Int. Cl.: C09D 11/02

(54) **Antistatic print inks for plastic films**

(30) Priority: 22.04.2003 JP 2003116922; 09.02.2004 JP 2004031551
(71) Applicant: Hayashi, Kanji, Tokyo (JP)
(72) Inventor: Hayashi, Kanji, Tokyo (JP)
(74) Representative: King, James Bertram

(57) **Abstract**

An antistatic print ink for printing onto a transparent or semitransparent plastic film wherein the ink includes a binder vehicle comprising a complex composition of two or more polyurethane resins. The ink may be prepared by adding an antistatic agent comprising a mixed composition of a fatty acid dimethylethyl ammonium ethosulfate and polyoxyethylene alkyl ether to the binder as an organic solvent solution for an ester-based polyurethane resin comprising a mixed composition of high Tg polymer and low Tg polymer. The antistatic property is imparted to the plastic film by coating or backing the plastic film with the ink. The antistatic property can be given to the plastic film during the printing process, so that the performance can be improved with cost reduced. The aqueous antistatic print ink is effective in avoiding environmental contamination.

## Description

### FIELD OF THE INVENTION

The present invention relates to antistatic print inks for transparent or semi-transparent plastic films, and more particularly to ink which provides an antistatic property especially when used for a backing and effective for suppressing static electricity caused by friction generated on both surfaces of a plastic film sheet. This invention also relates to a transparent or semi-transparent plastic film printed material printed with such ink.

### BACKGROUND OF THE INVENTION

In a case of a plastic film, electrification due to friction occurs during the laminating process, printing process, and bag-forming process, and there have been introduced various contrivances for preventing the electrification. The examples include a method in which an antistatic agent is kneaded in resin before the resin is processed into a film, and a method in which a surface of the film is coated with an antistatic agent.

### [Patent Publication 1]

### Japanese Patent Laid-Open Publication No. HEI 05-345351.

This document provides a film for print laminate having excellent antistatic effect which does not spoil the excellent characteristics of the film such as transparency, workability, and the like by kneading an antistatic agent therein and a method of manufacturing a film for print laminate by processing resin with the antistatic agent kneaded therein into a film by means of the calendar method, T-die extrusion method, or solvent casting method, extending the film by means of such a method as the heat roll method, tenter or stretching method, or inflation method, and further thermally curing the extended film at a temperature higher than the temperature employed during the extending step.

### [Patent Publication 2]

### Japanese Patent Laid-Open Publication No. HEI 10-058622

This relates to an antistatic barrier film having both an oxygen blocking capability and the electrification preventing capability of the PVA coat film 12, and the antistatic barrier film 10 comprises a PVA coat layer 2 provided on a substrate film 1 or a vapour-deposited film, and a bridge type of antistatic agent coat layer 3 provided on a heat seal film 5 laminated on each other via an adhesive layer 4 or a adhesive resin layer 7, and is characterised in that the bridge type of antistatic agent coat layer 3 constitutes a surface-active antistatic agent coat layer made of a copolymer comprising an acrylic ester having a tetra-ammonium group, an acrylic ester, and a methacrylic ester, polyethylene imine and a glycydil compound.

### OBJECTS OF THE INVENTION

An object of the present invention to provide print ink for a plastic film which has a good to excellent antistatic property and does not cause problems such as bleeding. A further object of the present invention is to provide print ink for a plastic film capable of overcoming the problems of environmental contamination.

### BRIEF DESCRIPTION OF THE PREFERRED EMBODIMENTS

This invention is based on the idea that as a plastic film is often subjected to printing, static electricity charges could be avoided by providing the ink with an antistatic property with the print ink spread over an entire surface of the plastic film as a backing.

In accordance with this invention this has been achieved as described hereinafter.

This invention and according to claim 1 provides print ink for a plastic film with an antistatic agent added therein.

In this invention according to claim 2 dependent on the invention according to claim 1, the plastic film is transparent or semi-transparent, and the antistatic print ink is a gravure ink forming a backing.

In this invention according to claim 3 dependent on the invention according to claim 1 or claim 2, a main component of the vehicle used as a binder in the antistatic ink is a complex composition of two or more types of polyurethane resins.

In the invention according to claim 4 dependent on the invention according to claim 3, the polyurethane is a mixed composition of a water dispersion type of a higher Tg polymer and a water dispersion type of lower Tg polymer.

In the invention according to claim 5 dependent on the invention according to claim 4, ultra-high molecular weight polyvinyl pyrrolidone is added to the mixed composition of polymers as a stabiliser.

In the invention according to claim 6 dependent on the invention according to claim 1, the antistatic agent is added to the aqueous mixed solution of a complex polyurethane resin and polyvinyl pyrrolidone.

In the invention according to claim 7 dependent on the invention according to claim 6, the antistatic agent is a mixed aqueous solution of a alkyldimethylamino betaine acetate and an electrolytic metallic salt.

The invention according to claim 8 provides a plastic film printed material backed-up by aqueous antistatic print ink.

### Effect:

In the above configurations, print ink with an antistatic agent added therein can be used for printing with general printing machines by the conventional printing method. It is most effective when the antistatic agent is added to the ink for backing up, but it is also possible to add the antistatic agent to any other ink depending the printing design. However, the best effectiveness of the antistatic property is achieved when the antistatic property is provided over the whole printed area or in area as close as possible to the whole printed area, and therefore the ink for backing up is most effective.

In terms of the printing method, the ink for backing up can be used not only in gravure printing but also in flexographic printing, and there is no restriction over the printing method.

The present invention relates to a vehicle binder for aqueous antistatic print ink such as printing ink for baking up, and aqueous antistatic print ink according to the present invention can be prepared by adding pigments such as titanium oxide to the binder.

In the invention according to claim 4, high Tg polyurethane resin is a polyester product composed of an isophorone di-iso-cyanate and polycaprolactonediol, and in the resin Tg is in the range from 0 to 40 °C. On the other hand, low Tg polyurethane resin is a polyester product composed of an isophorone di-isocyanate and polyesterdiol, and in this resin, Tg is in the range from -30 to 0 °C.

The mixing ratio of the aforementioned high Tg resin and low Tg resin is preferably 1:2 by solid weight. This mixing ratio is preferable for avoiding the blocking property on a surface printed with the ink.

In the invention according to claim 5, the mixing ratio of polyvinyl pyrrolidone to the composite polyurethane acceptable as an appropriate addition rate is in the range from 1:2 to 1:5 by solid weight, and more preferably in the range from 1:2.5 to 1:3 . The molecular weight of the polyvinyl pyrrolidone used is in the range from 600,000 to 1,200,000.

In the invention according to claim 7, the mixing ratio of a alkyldimethylamino betaine acetate and an electrolytic metallic salt to be employed for preparation of the antistatic agent is in the range of 95:5 to 90:10, and more preferably in the range from 94:6 to 92:8.

### Example 1

Components used for preparation the vehicle binder according to the invention are shown in Table 1 below.

**Table 1**

| | | | |
|---|---|---|---|
| 1 | High Tg polyurethane resin | Solid content%=35.0% of water dispersions | Liquid A |
| 2 | Low Tg polyurethane resin | Solid content%=34.7% water dispersions | Liquid B |
| 3 | Polyvinyl pyrrolidone | Solid content%=20% aqueous solution | Liquid C |
| 4 | Antistatic agent | Solid content%=35.8% aqueous solution | Liquid D |
| 5 | Surface-active agent | Solid content%=4.0% aqueous solution | Liquid E |

The prescriptions of the vehicle binder according to the invention with the above described liquid A through liquid E are as shown in Table 2.

**Table 2**

| Components | Weight(g) | Solid weight(g) | Solid % |
|---|---|---|---|
| Liquid A | 180 | 63.00 | Approx.22.24 |
| Liquid B | 360 | 124.92 | 44.10 |
| Liquid C | 300 | 60.00 | 21.18 |
| Liquid D | 90 | 32.22 | 11.37 |
| Liquid E | 78 | 3.12 | 1.10 |
| Total | 1008 | 283.26(28.10%) | |

### Example 2

The titanium oxide white colour pigment (for back- up printing) with the 10 to 15 micron grain diameter is added to the vehicle binder aqueous preparation liquid in Example 1. The white colour ink for back-up printing is prepared by setting the addition rate to 35% by weight of the preparation liquid.

### Example 3

Printing was performed using the white colour ink for gravure back-up printing obtained in Example 2 on a corona discharge-treated surface of PET film 12 micron (E-51 00) manufactured by Toyobo Co., Ltd. by the engraved gravure printing flat plate (150 lines). The printing rate with the gravure printing machine was 70 m/min and the temperature employed for drying was 60 °C. The evaluation results in regards to the adhesiveness and the antistatic effectiveness obtained by sampling once for each 100 m in the flow direction are shown in Table 3 below.

**Table 3**

| Sample NO. | Rubbing (a) | Tape (b) | Concealment (c) | Levelling (d) | Surface resistance(Ω) | Friction Electric strength(KV) |
|---|---|---|---|---|---|---|
| 1 | O | O | O | Δ | 1.8 × 10¹⁰ | 0.0 |
| 2 | O | O | O | Δ | 2.5 × 10¹⁰ | 0.0 |
| 3 | O | O | O | O | 1.6 × 10¹⁰ | 0.0 |
| 4 | O | O | O | O | 1.2 × 10¹⁰ | 0.0 |
| 5 | O | O | O | O | 2.2 × 10¹⁰ | 0.0 |
| 6 | O | O | O | O | 1.4 × 10¹⁰ | 0.1 |
| 7 | O | O | O | Δ | 1.2 × 10¹⁰ | 0.0 |
| 8 | O | O | O | O | 1.2 × 10¹⁰ | 0.1 |
| 9 | O | O | O | Δ | 2.3 × 10¹⁰ | 0.0 |
| 10 | O | O | O | Δ | 1.4 × 10¹⁰ | 0.0 |
| (23 °C, 40%RH) | | | | | | |

(a): Avulsion of ink is checked by grasping the printed material with both hands and rubbing together the printed surfaces face to face 10 times in order to check avulsion of the ink.
   (no problem/O, slightly detached/Δ, partially detached/X)
(b): 18mm cellophane tape is pressed to the printed surface and then forcefully separated therefrom to check the adhesiveness of the ink.
   (no problem/O, slightly detached/Δ, partially detached/X)
(c): The printed material is visually checked through newspapers to evaluate the visibility of the printed letters.
   (no visibility/O, slightly visible/Δ, visible/X)
(d): Uniformity of the printing without unevenness or flow is checked.
   (complete uniformity/O, slightly uneven/Δ, some flow/X)

### Example 4

The white colour gravure ink for backing up obtained in Example 2 above is printed over another ink to confirm the mutual adhesiveness and the antistatic property. Like in Example 3, corona discharge- treated surface of the bi-axially drawn_PET film 12 micron (E-5100) is printed with another ink as a first colour with the engraving gravure printing plate (175 lines) in the solid state, and then printed with the white colour gravure ink for backing up obtained in Example 2 as a second colour by the engraving gravure printing plate (150 lines). The printing rate by the gravure printing machine was 70 m/min, and the temperature for drying was 60°C.

The results of evaluation for the adhesiveness of the ink as well as for the antistatic property are shown in Table 4 below.

**Table 4**

| Target ink | Type of the inks | Name and dilution ratio |
|---|---|---|
| Ink A | General ink | New LP super R39 Cyan (40% cut by exclusive use medium) |
| Ink B | Non toluene type ink | New LP Fine R39 Cyan (40% cut by exclusive use medium) |
| Ink C | Aqueous ink | Marine plus G R507 elementary cyan (20% cut by exclusive use solvent) |
| Ink A and B are manufactured by TOYO INK MFG Co., Ltd., while ink C is manufactured by DAINIPPON Ink And Chemicals, Incorporated. | | |

The evaluation result of the ink adhesiveness and the antistatic property measured by sampling once for every 100m in the flow direction are shown in Table 5 below.

**Table 5**

| Ink | Rubbing (a) | Tape (b) | Concealment (c) | Levelling (d) | Surface resistance(Ω) | Friction-charged Electrostatic Potential (kV) |
|---|---|---|---|---|---|---|
| A | O | O | Δ | Δ | 1.5 x 10¹⁰ | 0.0 |
| B | O | O | Δ | Δ | 3.0 x 10¹⁰ | 0.0 |
| C | O | O | Δ | Δ | 7.0 x 10⁹ | 0.0 |

The data in (a),(b),(c) and (d) were collected in the same way as that in Example 3 thereof.

### Example 5

The LLDPE (linear low-density polyethylene) film (40 microns) was selected as a sealant film and also the ester adhesive:A-620/A-65 manufactured by Mitsui Takeda Chemicals, Inc. was selected as the adhesive agent for the two-colour overprinted material according to the embodiment 4, then the adhesive agent prepared. After a predetermined formula was applied to the ink-printed surface of the printed film and the surface was dried, the corona discharge-treated surface of the sealant film was glued to the sealant film. The engraving gravure printing plate of the dry laminator was of 100 lines and the use rate of the adhesive agent applied after drying was 3g/m². The printed material was stored for 48 hours in the temperature-controlled room at 40 °C for curing.

### Example 6

The lamination strength and heat seal strength of the laminate film produced obtained in Example 5 are shown in Table 7 below, while the results of measurement for the friction-charged electrostatic potential are shown in Table 6.

**Table 6**

| 1. The friction-charged electrostatic potential (v) Measurement environment: 23°C , 40%RH | | | |
|---|---|---|---|
| | Sample | Base material side | Sealant side |
| 1 | PET/aqueous ink | 948→ 305 O | 854→ 181 O |
| 2 | | 835→ 274 O | 800→ 194 O |
| 3 | | 967→ 530 Δ | 1057→ 445 Δ |
| 4 | PET/general ink | 750→ 445 O | 923→ 355 O |
| 5 | | 672→ 323 O | 841→ 297 O |
| 6 | | 425→ 257 O | 984→ 480 Δ |
| (measured in 60 sec after the end of friction) | | | |

**Table 7**

| 2. The lamination strength and the heat seal strength | | | |
|---|---|---|---|
| | Sample | Lamination strength [gf/15mm] | Heat seal strength [kgf/15mm] |
| 1 | PET/aqueous ink | 450 (base material worn) | 3.5 (seal worn) |
| 2 | | 370 (base material worn) | 3.4 (seal worn) |
| 3 | | 520 (base material worn) | 3.9 (seal worn) |
| 4 | PET/general ink | 380 (base material worn) | 3.7 (seal worn) |
| 5 | | 570 (base material worn) | 3.8 (seal worn) |
| 6 | | 480 (base material worn) | 3.6 (seal worn) |

In Examples 1 through 6 described above, the printing ink is gravure ink, the printing machines is a gravure printing machine, and the ink for backing-up is used. However, the present invention is not limited to these cases as long as electrification can be prevented.

### Effects of the invention

The present invention according to claims 1 through 8 could give the antistatic property to the plastic films printed with the ink according to the present invention as described above. A printed material with excellent antistatic property can be obtained by giving the antistatic property especially to the ink for backing up.

Additionally, the antistatic property can be given to the plastic film during the printing process, so that the performance can be improved with the cost reduced more as compared to the conventional method for preventing electrification of a plastic film.

Further the aqueous antistatic print ink according to the present invention is effective in overcoming the environmental contamination.

With the present invention according to claim 9 dependent on the invention according to claim 1 or claim 2, in the antistatic print ink, a resin component of the vehicle binder is ester-based polyurethane resin capable of being dissolved in an organic solvent.

The present invention according to claim 10 dependent on the invention according to claim 9, the ester-based polyurethane resin is a mixed composition of a high Tg polymer and a low Tg polymer each based on an organic solvent.

The invention according to claim 11, the antistatic agent for the ester-based polyurethane according to claim 10 is added to an organic solvent solution.

The invention according to claim 12, the antistatic agent described in claim 11 is a mixed composition of fatty acid dimethylethyl ammonium ethosulfate and polyoxyethylene alkyl ether.

The invention according to claim 13, a plastic film printed material is backed up with the antistatic print ink based on an organic solvent.

### Effect

In the invention according to above claim 9 thorough 13, the print ink with an antistatic agent added therein can be used for printing with general printing machines by the conventional printing method. For printing, it is most effective to add the antistatic agent to the ink for backing up, but it is also possible to add the antistatic agent to any other ink. However, the best effectiveness of the antistatic property is achieved when the antistatic property is provided in the whole printed area or in area as close as the whole printed area, and therefore the ink for backing up is most effective.

In terms of the printing method, the ink for backing up can be used not only in gravure printing but also in flexographic printing, and there is no restriction over the printing method.

The present invention provides the antistatic print ink based on an organic solvent, which is a vehicle binder for print ink for backing up, and it is possible to prepare the antistatic print ink based on an organic solvent can be prepared by mixing, for example, a pigment such as titanium oxide and a solvent in this binder.

The resin component of the vehicle binder is ester-based polyurethane resin capable of being dissolved in an organic solvent, and this resin is a mixed composition of a high Tg polymer and a low Tg polymer. The high Tg polyurethane resin is in the range from Tg=0 to 40°C. On the other hand, the low Tg polyurethane resin is in the range of Tg=-30 to 0°C.

The mixing ratio of the high Tg resin and the low Tg resin in the range from 1:5 to 1:1 by solid weight, and more preferably is in the range from 1:2 to 1:2.5.

The antistatic agent according to the present invention is a mixed composition of fatty acid dimethylethyl ammonium ethosulfate and polyoxyethylene alkyl ether, and the mixed ratio is in the range from 8:1 to 15:1 by solid weight, and more preferably is in the range from 10:1 to 12:1.

### Example 7

Components of the vehicle binder preparation according to the invention are shown in Table 8 below.

**Table 8**

| | | | |
|---|---|---|---|
| 1 | High Tg polyurethane resin | Solid content%=30.0% ethyl acetate solution | Liquid A |
| 2 | Low Tg polyurethane resin | Solid content%=30.0% ethyl acetate solution | Liquid B |
| 3 | Antistatic agent | Solid content%=30.0% ethyl acetate solution | Liquid D |

Hereunder, the prescriptions of the vehicle binder with the above described liquid A through liquid C are shown in table 9.

**Table 9**

| Components | Quantity(g) | Solid weight(g) | Solid % |
|---|---|---|---|
| Liquid A | 200 | 60.0 | Approx.29.76 |
| Liquid B | 400 | 120.0 | 59.52 |
| Liquid C | 72 | 21.6 | 10.71 |
| Total | 672 | 201.6 | |

### Example 8

The titanium oxide white colour pigment (for back up printing) with the 10 to 15 micron grain diameter was added to the prepared vehicle binder aqueous obtained in Example 7. The white colour ink for backing up was prepared by adding 35 portions of the pigment to 65 portions of the prepared solution (solution prepared by diluting 15 portions of the solution containing the components as shown in Table 2 above to 50 portions of the IPA/ethyl acetate mixed solution.

### Example 9

Printing was carried out using the white colour ink(a) for gravure back-up printing obtained in Example 8 and NEW-LP super white ink (urethane based)(b) manufactured by TOYO INK MFG. Co., Ltd. on the surface of the corona discharge-treated surfaces of the following films; the bi-axially drawn PET film 12µ (E-51 00) manufactured by Toyobo Co., Ltd. ; the bi-axially drawn nylon film 15µ (emblem ONU) manufactured by Unitika co., Ltd.; and the bi-axially drawn_PP film 20µ (FOR) with the engraving gravure printing plate (50 lines) in the solid state.

The printing rate with the gravure printing machine is was 120m/min, and the temperature employed for drying was 60°C.

Table 10 shows a result obtained for the adhesion and antistatic property of the ink at five positions by sampling once for every 5 m of the bi-axially drawn PET film 12µ in the flow direction at 5 position.

**Table 10**

| (20°C, 50%RH) | | | | | | |
|---|---|---|---|---|---|---|
| Sample NO. | Rubbing (*1) | Tape (*2) | Concealment (*3) | Levelling (*4) | Surface resistance(Ω) | Friction Electric strength(kV) |
| a1 | O | O | O | O | 7.2 x 10⁸ | 0.0 |
| a-2 | O | O | O | O | 6.8 x 10⁸ | 0.2 |
| a-3 | O | O | O | O | 7.3 x 10⁸ | 0.1 |
| a-4 | O | O | O | O | 6.5 x 10⁸ | 0.0 |
| a-5 | O | O | O | O | 7.0 x 10⁸ | 0.1 |
| b-1 | O | O | O | O | 1.8 x 10¹⁰ | 2.3 |
| b-2 | O | O | O | O | 1.2 x 10¹⁰ | 1.9 |
| b-3 | O | O | O | O | 4.5 x 10¹⁰ | 3.0 |
| b-4 | O | O | O | O | 3.4 x 10¹⁰ | 2.0 |
| b-5 | O | O | O | O | 2.0 x 10¹⁰ | 1.8 |

Further, the results obtained for the bi-axially drawn nylon film 15µ are shown in Table 11.

**Table 11**

| (20°C, 50%RH) | | | | | | |
|---|---|---|---|---|---|---|
| Sample NO. | Rubbing (*1 ) | Tape (*2) | Concealment (*3) | Levelling (*4) | Surface resistance(Ω) | Friction-charged Electrostatic potential(kV) |
| a1 | O | O | O | O | 6.3 x 10⁸ | 0.0 |
| a-2 | O | O | O | O | 6.5 x 10⁸ | 0.0 |
| a-3 | O | O | O | O | 7.4 x 10⁸ | 0.1 |
| a-4 | O | O | O | O | 6.2 x 10⁸ | 0.0 |
| a-5 | O | O | O | O | 6.2 x 10⁸ | 0.0 |
| b-1 | O | O | O | O | 1.8 x 10¹⁰ | 5.3 |
| b-2 | O | O | O | O | 1.8 x 10¹⁰ | 6.9 |
| b-3 | O | O | O | O | 1.5 x 10¹⁰ | 4.8 |
| b-4 | O | O | O | O | 3.3 x 10¹⁰ | 5.1 |
| b-5 | O | O | O | O | 3.3 x 10¹⁰ | 5.0 |

Furthermore, the results obtained for the bi-axially drawn PP film 20µ are shown in Table 12.

**Table 12**

| (20°C, 50%RH) | | | | | | |
|---|---|---|---|---|---|---|
| Sample NO. | Rubbing (*1) | Tape (*2) | Concealment (*3) | Levelling (*4) | Surface resistance(Ω) | Friction-charged Electrostatic potential (kV) |
| a1 | O | O | O | O | 6.3 x 10⁸ | 0.0 |
| a-2 | O | O | O | O | 6.5 x 10⁸ | 0.0 |
| a-3 | O | O | O | O | 7.0 x 10⁸ | 0.1 |
| a-4 | O | O | O | O | 7.0 x 10⁸ | 0.0 |
| a-5 | O | O | O | O | 6.8 x 10⁸ | 0.0 |
| b-1 | O | O | O | O | 1.8 x 10¹⁰ | 0.8 |
| b-2 | O | O | O | O | 1.2 x 10¹⁰ | 0.7 |
| b-3 | O | O | O | O | 1.6 x 10¹⁰ | 0.9 |
| b-4 | O | O | O | O | 1.5 x 10¹⁰ | 0.8 |
| b-5 | O | O | O | O | 1.8 x 10¹⁰ | 0.8 |

| | | | | | | |
|---|---|---|---|---|---|---|
| *1 : Avulsion of ink is checked by grasping the printed material with both hands and rubbing together the printed surfaces face to face 10 times in order to check avulsion of the ink. (no problem/O, slightly detached/Δ, partially detached/X) | | | | | | |
| *2: 18mm cellophane tape is pressed to the printed surface and then forcefully separated therefrom to check the adhesiveness of the ink. (no problem/O, slightly detached/Δ, partially detached/X) | | | | | | |
| *3: The printed material is visually checked through newspapers to evaluate the visibility of the printed letters. (no visibility/O, slightly visible/Δ, visible/X) | | | | | | |
| *4: Uniformity of the printing without unevenness or flow is checked. (complete uniformity/O, slightly uneven/Δ, some flow/X) | | | | | | |

### Example 10

The white colour gravure ink for backing up obtained in Example 8 is printed over another ink to check the mutual adhesiveness and the antistatic property. Like in Example 9, the corona discharge- treated surface of the bi-axially drawn PET film 12 µ (E-51 00) manufactured by Toyobo Co., Ltd. is printed using another ink as the first colour with the engraving gravure printing plate (175 lines) in the solid state, and then printed using the white colour gravure ink for backing up obtained in Example 2 as the second colour with the engraving gravure printing plate (150 lines). The printing rate with the gravure printing machine was 120m/min, and the temperature employed for drying was 60°C.

Table 13 shows the adhesiveness of the ink and the antistatic property of the printed materials.

**Table 13**

| Other inks | Type of the inks | Name and dilution ratio |
|---|---|---|
| Ink A | General ink | New LP super R39 Cyan (40% cut by exclusive use medium) |
| Ink B | Non toluene type ink | New LP Fine R39 Cyan (40% cut by exclusive use medium) |
| Ink C | Aqueous ink | Marine plus G R507 elementary cyan (20% cut by exclusive use solvent) |
| Ink A and B are manufactured by TOYO INK MFG. Co., Ltd., while ink C is manufactured by DAINIPPON Ink and Chemicals, Incorporated. | | |

Table 14 shows the adhesiveness of the ink and the antistatic property of the printed materials.

**Table 14**

| Ink | Rubbing (*1) | Tape (*2) | Concealment (*3) | Levelling (*4) | Surface resis^{t}ance(Ω) | Friction-charged Electrostatic potential(kV) |
|---|---|---|---|---|---|---|
| A | O | O | O | O | 1.8 x 10¹⁰ | 0.0 |
| B | O | O | O | O | 1.2 x 10¹⁰ | 0.0 |
| C | O | O | O | O | 1.2 x 10¹⁰ | 0.0 |

### Example 11

The films listed at Table 15 were selected each as a sealant film and the ester based adhesive manufactured by Mitsui Takeda Chemicals, Inc. was selected as the adhesive agent for preparation according to the mixing ratio shown in Table 16.

**Table 15**

| Film type | Thickness | Manufacturer | Product name |
|---|---|---|---|
| LLDPE | 40µ | Toyobo co., ltd. | LIX film |
| linear low-density polyethylene | | | L4102 |

**Table 16**

| | Product name | Blending quantity | Solid density |
|---|---|---|---|
| Base resin | A-620 | 16.0kg | 60% |
| Hardener | A-65 | 1.0kg | 100% |
| Solvent | ethyl acetate | 18.3kg | 0% |
| Total | | 35.3kg | 30% |

The prepared adhesive agent was applied on the surface of printed film printed with the ink, and after the printed surface was dried, it was glued together with the corona discharge-treated surface of the sealant film. The engraving gravure printing plate of the dry laminator was of 100 lines and the volume of the adhesive agent after drying was 3g/m². The adhesive was left for 48 hours in the temperature-controlled room at 40°C for curing.

Table 17 shows the measurement result of the lamination strength of the layered films glued as described above.

**Table 17**

| (g/15mm) | | | |
|---|---|---|---|
| Type of ink | Film configuration | Strength | Description |
| (a)white ink for gravure back print according to embodiment 2 | PET/LLDPE | 110 | |
| | NY/LLDPE | 590 | |
| | OPP/LLDPE | 328 | Film torn |
| (b)NEW-LP super white ink | PET/LLDPE | 108 | |
| | NY/LLDPE | 800 | |
| | OPP/LLDPE | 318 | Film torn |

Further the measurement result for the heat seal strength of the glued laminated film is shown in Table 18 below.

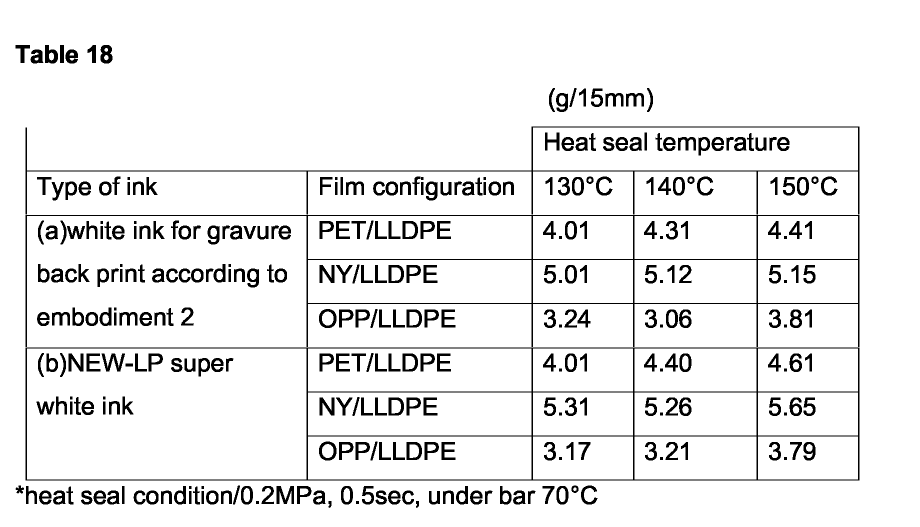

Further, Table 19 shows the measurement result of the glued layered films in terms of the surface resistance.

**Table 19**

| Type of ink | Film configuration | Substrate front side | Sealant back side |
|---|---|---|---|
| (a) | PET/LLDPE | 1.0 x 10¹² and above | 1.0 x 10¹² and above |
| | NY/LLDPE | 1.0 x 10¹² and above | 1.0 x 10¹² and above |
| | OPP/LLDPE | 1.0 x 10¹² and above | 1.0 x 10¹² and above |
| (b) | PET/LLDPE | 1.0 x 10¹² and above | 1.0 x 10¹² and above |
| | NY/LLDPE | 1.0 x 10¹² and above | 1.0 x 10¹² and above |
| | OPP/LLDPE | 1.0 x 10¹² and above | 1.0 x 10¹² and above |

Further, Table 20 shows the measurement result of the glued layered films in terms of the charged value.

**Table 20**

| Type of ink | Film configuration | Substrate front side | Sealant back side |
|---|---|---|---|
| (a) | PET/LLDPE | 0.4 ~ 0.6 | 0.4 ~ 0.6 |
| | NY/LLDPE | 0.3 ~ 0.5 | 0.3 ~ 0.5 |
| | OPP/LLDPE | 0.0 ∼ 0.1 | 0.0 ∼ 0.1 |
| (b) | PET/LLDPE | 5.5 ∼ 11.3 | 6.1 ∼ 10.3 |
| | NY/LLDPE | 9.1 ∼ 12.3 | 11.1 ∼ 14.2 |
| | OPP/LLDPE | 0.9 ∼ 1.5 | 1.1 ~ 2.3 |

From each of the above results, it is understood that it is possible to sufficiently achieve the antistatic property by using the print ink according to the present invention without lowering the quality as printed materials.

### Effect of the invention

In the present invention as described in claims 9 through 13, the antistatic property is provided to a plastic film during the printing process, by carrying out, for instance, back-up printing with the print ink with an antistatic agent added therein according to the present invention. The print ink with an antistatic agent added therein does not cause bleeding troubles as experienced in the conventional technology, in which an antistatic agent is kneaded in resin, especially when the print ink is used for backing up, so that deterioration in printing quality can be avoided.

Further, different from the conventional system in which a surface of a film is coated with an antistatic agent, the antistatic property is given during the printing process in this invention, so that the coating step can be omitted, and cost reduction can be realised for plastic film products having the antistatic property.

## Claims

1. Print ink for a plastic film **characterised in that** an antistatic agent is added to the ink.

2. Print ink for a transparent or semi-transparent plastic film in accordance with claim 1, **characterised in that** the antistatic print ink is a gravure ink for the purpose of backing up.

3. Print ink in accordance with claim 1 or claim 2, **characterised in that** a main component of a vehicle forming a binder thereof is a complex composition of two or more types of polyurethane resins.

4. Print ink for a plastic film in accordance with claim 3, **characterised in that** the polyurethane resins comprise a mixed composition of a water dispersion types of high Tg polymer and a water dispersion type of low Tg polymer.

5. Print ink for a plastic film in accordance with claim 4, **characterised in that** the polymeric mixed composition contains ultra-high molecular weight polyvinyl pyrrolidone added therein as a stabiliser.

6. Print ink for a plastic film in accordance with claim 1, **characterised in that** the antistatic agent is added to an aqueous mixed solution of a complex polyurethane resin and polyvinyl pyrrolidone.

7. A plastic print ink in accordance with claim 6, **characterised in that** the antistatic agent is a mixed aqueous solution of a alkyldimethyl betaine acetate and an electrolytic metallic salt.

8. A transparent or semi-transparent plastic film printed material backed up, or having a surface coated by an aqueous antistatic print ink.

9. Antistatic print ink according to claim 1 or claim 2, **characterised in that** a resin component of the vehicle binder is an ester-based polyurethane resin capable of being dissolved in an organic solvent.

10. A plastic ink in accordance with claim 9 and for a plastic film, **characterised in that** the ester-based polyurethane resin is a mixed composition of a high Tg polymer and a low Tg polymer each based on an organic solvent.

11. A print ink for a plastic film in accordance with claim 10, **characterised in that** the antistatic agent is added to an organic solvent solution for the ester-based polyurethane.

12. A print ink for a plastic film in accordance with claim 11, **characterised in that** the antistatic agent is a mixed composition of fatty acid dimethylethyl ammonium ethosulfate and polyoxyethylene alkyl ether.

13. A transparent or semi-transparent plastic film printed material coated or backed with the antistatic print ink of any preceding claim and based on an organic solvent.
